# FASCICULE DE BREVET EUROPEEN

(11) **EP 4 019 365 B1**
(45) Date de publication et mention de la délivrance du brevet: **05.02.2025**
(21) Numéro de dépôt: 21306912.3
(22) Date de dépôt: 23.12.2021
(51) Int. Cl.: B61D 27/00, B60L 50/53, B61C 3/02

(54) **VÉHICULE FERROVIAIRE COMPRENANT UNE PILE À COMBUSTIBLE ET UNE UNITÉ FRIGORIFIQUE RECEVANT UN FLUX DE CHALEUR FATALE DE LA PILE À COMBUSTIBLE**
SCHIENENFAHRZEUG MIT EINER BRENNSTOFFZELLE UND EINER KÜHLEINHEIT, DIE EINEN ABWÄRMEFLUSS VON DER BRENNSTOFFZELLE ERHÄLT
RAILWAY VEHICLE COMPRISING A FUEL CELL AND A REFRIGERATED UNIT RECEIVING A FLOW OF FREE HEAT FROM THE FUEL CELL

(30) Priorité: 24.12.2020 FR 2014127
(43) Date de publication de la demande: 29.06.2022
(73) Titulaire: ALSTOM Holdings, 93400 Saint-Ouen-sur-Seine (FR)
(72) Inventeur: CHIARANDINI, Bruno, 90000 Belfort (FR)
(74) Mandataire: Lavoix

(56) Documents cités:
- EP-A1- 3 584 518
- FR-A- 1 110 169
- FR-B1- 2 806 666
- US-A- 2 374 972

## Description

La présente invention concerne un véhicule ferroviaire comprenant une voiture comportant au moins une chambre froide, et une unité frigorifique configurée pour produire du froid dans la chambre froide.

L'invention concerne aussi un procédé correspondant.

Un tel véhicule ferroviaire est par exemple un train de marchandises transportant des denrées périssables, nécessitant une réfrigération. L'énergie pour produire le froid vient s'ajouter notamment à l'énergie consommée pour la traction.

Un but de l'invention est donc réduire la dépense d'énergie pour produire le froid.

A cet effet, l'invention a pour objet un véhicule ferroviaire comprenant :
- une première voiture comportant au moins au moins une pile à combustible adaptée pour produire une énergie électrique et un flux de chaleur fatale,
- une deuxième voiture comprenant au moins une chambre froide, et
- au moins une unité frigorifique configurée pour recevoir au moins une partie du flux de chaleur fatale comme source d'énergie et pour produire du froid dans la chambre froide.

Un véhicule ferroviaire comportant une unité frigorifique utilisant une chaleur fatale comme source d'énergie est connu du document FR 2 806 666 B1.

Selon des modes particuliers de réalisation, le véhicule ferroviaire comprend l'une ou plusieurs des caractéristiques suivantes, prise(s) isolément ou selon toutes les combinaisons techniquement possibles :
- le véhicule ferroviaire comporte en outre un système de refroidissement pour refroidir la pile à combustible, le système de refroidissement étant adapté pour envoyer un premier flux de fluide refroidi dans la pile à combustible, la pile à combustible étant adaptée pour chauffer le premier flux et produire un deuxième flux de fluide réchauffé formant le flux de chaleur fatale, l'unité frigorifique étant adaptée pour recevoir au moins une partie du deuxième flux et pour produire un troisième flux de fluide semi-refroidi, le système de refroidissement étant configuré pour produire le premier flux à partir d'au moins le troisième flux ;
- le premier flux, le deuxième flux et le troisième flux sont des flux d'eau ;
- le système de refroidissement, la pile à combustible et l'unité frigorifique sont configurés pour que le premier flux soit à une première température comprise entre 55°C et 70°C, et pour que le deuxième flux soit à une deuxième température plus élevée que la première température et comprise entre 60°C et 75°C ;
- le véhicule ferroviaire comprend une source d'énergie auxiliaire adaptée pour fournir sélectivement de l'énergie électrique à l'unité frigorifique ;
- l'unité frigorifique comprend un cycle frigorifique à absorption ou absorption ;
- le cycle frigorifique met en oeuvre de l'ammoniac en tant que fluide réfrigérant ;
- la première voiture et la deuxième voiture sont consécutives dans une direction de déplacement du véhicule ferroviaire ; et
- le véhicule ferroviaire comprend en outre une troisième voiture tractrice adaptée pour être alimentée au moins en partie par l'énergie électrique produite par la pile à combustible, dans lequel la première voiture est de préférence située entre la deuxième voiture et la troisième voiture dans une direction de déplacement du véhicule ferroviaire.

L'invention a aussi pour objet un procédé mettant en oeuvre un véhicule ferroviaire tel que décrit précédemment, et comprenant les étapes suivantes :
- production de l'énergie électrique et du flux de chaleur fatale par la pile à combustible,
- réception d'au moins une partie du flux de chaleur fatale comme source d'énergie par l'unité frigorifique, et
- production du froid dans la chambre froide par l'unité frigorifique.

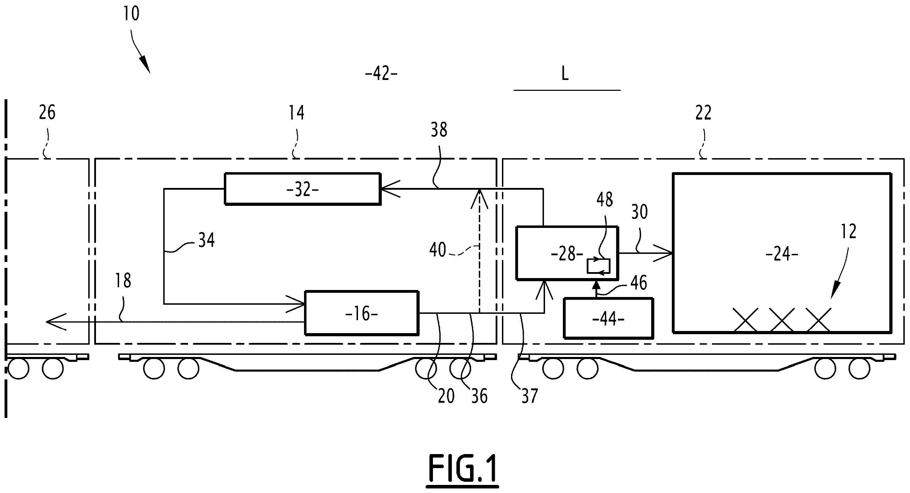

L'invention sera mieux comprise à la lecture de la description qui va suivre, donnée uniquement à titre d'exemple et faite en se référant au dessin annexé, sur lequel la figure 1 unique est une vue schématique, de côté, partielle, d'un véhicule selon l'invention.

En référence à la figure 1, on décrit un véhicule ferroviaire 10 selon l'invention.

Le véhicule ferroviaire 10 est par exemple un train assurant notamment du fret de marchandises périssables 12.

Le véhicule ferroviaire 10 s'étend selon une direction de déplacement L.

Le véhicule ferroviaire 10 comprend par exemple une première voiture 14 comportant au moins au moins une pile à combustible 16 adaptée pour produire une énergie électrique 18 et un flux de chaleur fatale 20, une deuxième voiture 22 comprenant au moins une chambre froide 24, et par exemple une troisième voiture 26 tractrice avantageusement adaptée pour recevoir l'énergie électrique 18 et la convertir en puissance mécanique de traction.

Par « chaleur fatale », on entend une production de chaleur, non souhaitée et *a priori* inutile, par la pile à combustible 16, à une température relativement basse.

Le véhicule ferroviaire 10 comprend aussi une unité frigorifique 28 configurée pour recevoir le flux de chaleur fatale 20 comme source d'énergie et pour produire du froid 30 dans la chambre froide 24.

Dans l'exemple représenté, la première voiture 14 se situe entre la deuxième voiture 22 et la troisième voiture 26 dans la direction de déplacement L. Ces trois voitures sont par exemples consécutives dans le véhicule ferroviaire 10, la troisième voiture 26 étant avantageusement située en tête du véhicule ferroviaire 10.

Selon des variantes non représentées, les trois voitures sont situées différemment les unes par rapport aux autres.

Selon d'autres variantes encore, non représentées, le véhicule ferroviaire 10 comporte une ou plusieurs autres voitures analogues à la première voiture 14, à la deuxième voiture 22 et/ou à la troisième voiture 26, et/ou une ou plusieurs autres voitures de type(s) différents.

La première voiture 14 comporte par exemple un système de refroidissement 32 pour refroidir la pile à combustible 16.

Le système de refroidissement 32 est adapté pour envoyer un premier flux 34 de fluide refroidi dans la pile à combustible 16, la pile à combustible étant adaptée pour chauffer le premier flux 34 et produire un deuxième flux 36 de fluide réchauffé formant le flux de chaleur fatale 20. Le système de refroidissement 32 est configuré pour produire le premier flux 34 à partir d'un troisième flux 38 de fluide semi-refroidi provenant de l'unité frigorifique 28.

Selon une variante non représentée, le système de refroidissement 32 est configuré pour produire le premier flux 34 également à partir d'une partie 40 du deuxième flux 36 provenant directement de la pile à combustible 16 sans passer par l'unité frigorifique 28. Si l'unité frigorifique 28 de fonctionne pas, éventuellement l'intégralité du deuxième flux 36 de fluide réchauffé est renvoyée au système de refroidissement 32.

Le système de refroidissement 32 est par exemple constitué par un échangeur air ambiant/liquide (non représenté) adapté pour dissiper dans l'air ambiant 42 une partie de la chaleur contenue dans le troisième flux 38, et ainsi refroidir le troisième flux.

Le système de refroidissement 32, la pile à combustible 16 et l'unité frigorifique 28 sont avantageusement configurés pour que le premier flux 34 soit à une première température comprise entre 55°C et 70°C, et le deuxième flux 36 à une deuxième température plus élevée que la première température et comprise entre 60°C et 75°C.

Le premier flux 34, le deuxième flux 36 et le troisième flux 38 sont par exemple des flux d'eau.

La deuxième voiture 22 comprend avantageusement une source d'énergie auxiliaire 44 adaptée pour fournir sélectivement de l'énergie électrique 46 à l'unité frigorifique 28, notamment si la pile à combustible 16 n'est pas en fonctionnement ou si la pile à combustible ne délivre pas assez de chaleur fatale.

L'unité frigorifique 28 est adaptée pour recevoir au moins une partie 37 du deuxième flux 36 et pour produire le troisième flux 38 de fluide semi-refroidi.

L'unité frigorifique 28 comprend avantageusement un cycle frigorifique 48 à adsorption de gaz, le cycle frigorifique 48 mettant par exemple en oeuvre de l'ammoniac en tant que fluide réfrigérant.

En variante, l'unité frigorifique 28 comprend un cycle frigorifique 48 à absorption.

Un tel cycle frigorifique est connu en lui-même. Selon un modèle de réalisation particulier, le cycle frigorifique 48 est adapté pour vaporiser l'ammoniac liquide dans la chambre froide 24 pour produire le froid 30.

Grâce à un tel cycle frigorifique, la chaleur fatale 20, *a priori* inutile, est convertie en froid 30 utile, malgré la deuxième température relativement basse.

Le fonctionnement du véhicule ferroviaire 10 découle de sa structure et sera brièvement décrit pour illustrer un procédé selon l'invention.

La pile à combustible 16 produit l'énergie 18 et le flux de chaleur fatale 20. L'énergie électrique 18 produite est éventuellement convertie et alimente au moins un moteur (non représenté) de la troisième voiture 26. En variante, elle peut servir, au moins en partie, à alimenter d'autres organes consommateurs d'énergie du véhicule ferroviaire 10.

La chaleur fatale 20 est, dans l'exemple représenté, véhiculée par le deuxième flux 36 de fluide réchauffé.

La chaleur fatale 20 est reçue par l'unité frigorifique 28 comme source d'énergie, l'unité frigorifique 28 produisant le froid 30 dans la chambre froide 24. Dans l'exemple, l'énergie récupérée par l'unité frigorifique 28 correspond à l'abaissement de température entre le deuxième flux 36 et le troisième flux 38.

Eventuellement, la source d'énergie auxiliaire 44 fournit sélectivement un appoint d'énergie électrique à l'unité frigorifique 28.

Grâce aux caractéristiques techniques ci-dessus, une partie au moins de la chaleur fatale 20 de la pile à combustible 16 est valorisée pour produire le froid 30. La dépense d'énergie pour produire le froid 30 est donc réduite.

## Revendications

1. Véhicule ferroviaire (10) comprenant :
- une première voiture (14) comportant au moins au moins une pile à combustible (16) adaptée pour produire une énergie électrique (18) et un flux de chaleur fatale (20),
- une deuxième voiture (22) comprenant au moins une chambre froide (24), et
- au moins une unité frigorifique (28) configurée pour recevoir au moins une partie (37) du flux de chaleur fatale (20) comme source d'énergie et pour produire du froid (30) dans la chambre froide (24).

2. Véhicule ferroviaire (10) selon la revendication 1, comportant en outre un système de refroidissement (32) pour refroidir la pile à combustible (16), le système de refroidissement (32) étant adapté pour envoyer un premier flux (34) de fluide refroidi dans la pile à combustible (16), la pile à combustible (16) étant adaptée pour chauffer le premier flux (34) et produire un deuxième flux (36) de fluide réchauffé formant le flux de chaleur fatale (20), l'unité frigorifique (28) étant adaptée pour recevoir au moins une partie (37) du deuxième flux (36) et pour produire un troisième flux (38) de fluide semi-refroidi, le système de refroidissement (32) étant configuré pour produire le premier flux (34) à partir d'au moins le troisième flux (38).

3. Véhicule ferroviaire (10) selon la revendication 2, dans lequel le premier flux (34), le deuxième flux (36) et le troisième flux (38) sont des flux d'eau.

4. Véhicule ferroviaire (10) selon la revendication 2 ou 3, dans lequel le système de refroidissement (32), la pile à combustible (16) et l'unité frigorifique (28) sont configurés pour que le premier flux (34) soit à une première température comprise entre 55°C et 70°C, et pour que le deuxième flux (36) soit à une deuxième température plus élevée que la première température et comprise entre 60°C et 75°C.

5. Véhicule ferroviaire (10) selon l'une quelconque des revendications 1 à 4, comprenant une source d'énergie auxiliaire (44) adaptée pour fournir sélectivement de l'énergie électrique (46) à l'unité frigorifique (28).

6. Véhicule ferroviaire (10) selon l'une quelconque des revendications 1 à 5, dans lequel l'unité frigorifique (28) comprend un cycle frigorifique (48) à absorption ou absorption.

7. Véhicule ferroviaire (10) selon la revendication 6, dans lequel le cycle frigorifique (48) met en oeuvre de l'ammoniac en tant que fluide réfrigérant.

8. Véhicule ferroviaire (10) selon l'une quelconque des revendications 1 à 7, dans lequel la première voiture (14) et la deuxième voiture (22) sont consécutives dans une direction de déplacement (L) du véhicule ferroviaire (10).

9. Véhicule ferroviaire (10) selon l'une quelconque des revendications 1 à 8, comprenant en outre une troisième voiture (26) tractrice adaptée pour être alimentée au moins en partie par l'énergie électrique (18) produite par la pile à combustible (16), dans lequel la première voiture (14) est de préférence située entre la deuxième voiture (22) et la troisième voiture (26) dans une direction de déplacement (L) du véhicule ferroviaire (10).

10. Procédé mettant en oeuvre un véhicule ferroviaire (10) selon l'une quelconque des revendications 1 à 9, et comprenant les étapes suivantes :
- production de l'énergie électrique (18) et du flux de chaleur fatale (20) par la pile à combustible (16),
- réception d'au moins une partie (37) du flux de chaleur fatale (20) comme source d'énergie par l'unité frigorifique (28), et
- production du froid (30) dans la chambre froide (24) par l'unité frigorifique (28).

## Patentansprüche

1. Schienenfahrzeug (10), umfassend:
- einen ersten Wagen (14), der mindestens eine Brennstoffzelle (16) umfasst, die geeignet ist, eine elektrische Energie (18) und einen Abwärmestrom (20) zu erzeugen,
- einen zweiten Wagen (22), der mindestens ein Kühlkammer (24) umfasst, und
- mindestens eine Kühleinheit (28), die ausgelegt ist, um mindestens einen Teil (37) des Abwärmestroms (20) als Energiequelle zu empfangen und in der Kühlkammer (24) Kälte (30) zu erzeugen.

2. Schienenfahrzeug (10) nach Anspruch 1, aufweisend ferner ein Kühlsystem (32) zum Kühlen der Brennstoffzelle (16), wobei das Kühlsystem (32) geeignet ist, einen ersten Strom (34) gekühlten Fluids in die Brennstoffzelle (16) zu leiten, wobei die Brennstoffzelle (16) geeignet ist, den ersten Strom (34) zu erwärmen und einen zweiten Strom (36) erwärmten Fluids zu erzeugen, der den Abwärmestrom (20) bildet, wobei die Kühleinheit (28) geeignet ist, zumindest einen Teil (37) des zweiten Stroms (36) zu empfangen und einen dritten Strom (38) halbgekühlten Fluids zu erzeugen, wobei das Kühlsystem (32) ausgelegt ist, um den ersten Strom (34) aus zumindest dem dritten Strom (38) zu erzeugen.

3. Schienenfahrzeug (10) nach Anspruch 2, wobei der erste Strom (34), der zweite Strom (36) und der dritte Strom (38) Wasserströme sind.

4. Schienenfahrzeug (10) nach Anspruch 2 oder 3, wobei das Kühlsystem (32), die Brennstoffzelle (16) und die Kühleinheit (28) ausgelegt sind, damit der erste Strom (34) eine erste Temperatur zwischen 55 °C und 70 °C aufweist und der zweite Strom (36) eine zweite Temperatur aufweist, die höher ist als die erste Temperatur und zwischen 60 °C und 75 °C liegt.

5. Schienenfahrzeug (10) nach einem der Ansprüche 1 bis 4, umfassend eine Hilfsenergiequelle (44), die geeignet ist, die Kühleinheit (28) selektiv mit elektrischer Energie (46) zu versorgen.

6. Schienenfahrzeug (10) nach einem der Ansprüche 1 bis 5, wobei die Kühleinheit (28) einen Absorptions- oder Adsorptionskältekreislauf (48) umfasst.

7. Schienenfahrzeug (10) nach Anspruch 6, wobei der Kältekreislauf (48) Ammoniak als Kühlmittel einsetzt.

8. Schienenfahrzeug (10) nach einem der Ansprüche 1 bis 7, wobei der erste Wagen (14) und der zweite Wagen (22) in einer Fahrtrichtung (L) des Schienenfahrzeugs (10) hintereinander liegen.

9. Schienenfahrzeug (10) nach einem der Ansprüche 1 bis 8, ferner umfassend einen dritten ziehenden Wagen (26), der geeignet ist, zumindest teilweise durch die von der Brennstoffzelle (16) erzeugte elektrische Energie (18) versorgt zu werden, wobei der erste Wagen (14) vorzugsweise zwischen dem zweiten Wagen (22) und dem dritten Wagen (26) in einer Fahrtrichtung (L) des Schienenfahrzeugs (10) angeordnet ist.

10. Verfahren, bei dem ein Schienenfahrzeug (10) nach einem der Ansprüche 1 bis 9 eingesetzt wird, und die folgenden Schritte umfasst:
- Erzeugen der elektrischen Energie (18) und des Abwärmestroms (20) durch die Brennstoffzelle (16),
- Empfangen mindestens eines Teils (37) des Abwärmestroms (20) als Energiequelle durch die Kühleinheit (28), und
- Erzeugen von Kälte (30) in der Kühlkammer (24) durch die Kühleinheit (28).

## Claims

1. A railway vehicle (10) comprising:
- a first car (14) comprising at least one fuel cell (16) adapted to produce electrical energy (18) and a free heat flow (20),
- a second car (22) comprising at least one cold room (24), and
- at least one refrigerated unit (28) configured to receive at least a part (37) of the free heat flow (20) as an energy source and to produce cold (30) in the cold room (24).

2. The railway vehicle (10) according to claim 1, further comprising a cooling system (32) for cooling the fuel cell (16), the cooling system (32) being adapted to send a first flow (34) of cooled fluid into the fuel cell (16), the fuel cell (16) being adapted to heat the first flow (34) and to produce a second flow (36) of heated fluid forming the free heat flow (20), the refrigerated unit (28) being adapted to receive at least a part (37) of the second flow (36) and to produce a third flow (38) of semi-cooled fluid, the cooling system (32) being configured to produce the first flow (34) from at least the third flow (38).

3. The railway vehicle (10) according to claim 2, wherein the first flow (34), the second flow (36) and the third flow (38) are water flows.

4. The railway vehicle (10) according to claim 2 or 3, wherein the cooling system (32), the fuel cell (16) and the refrigerated unit (28) are configured so that the first flow (34) is at a first temperature between 55°C and 70°C, and so that the second flow (36) is at a second temperature higher than the first temperature and between 60°C and 75°C.

5. The railway vehicle (10) according to any one of claims 1 to 4, comprising an auxiliary power source (44) adapted to selectively supply electrical power (46) to the refrigerated unit (28).

6. The railway vehicle (10) according to any one of claims 1 to 5, wherein the refrigerated unit (28) comprises an absorption or adsorption refrigeration cycle (48).

7. The railway vehicle (10) according to claim 6, wherein the refrigeration cycle (48) uses ammonia as refrigerant.

8. The railway vehicle (10) according to any one of claims 1 to 7, wherein the first car (14) and the second car (22) are consecutive in a direction of travel (L) of the railway vehicle (10).

9. The railway vehicle (10) according to any one of claims 1 to 8, further comprising a third traction car (26) adapted to be powered at least in part by the electrical energy (18) produced by the fuel cell (16), wherein the first car (14) is preferably located between the second car (22) and the third car (26) in a direction of travel (L) of the railway vehicle (10).

10. A method implementing a railway vehicle (10) according to any one of claims 1 to 9, and comprising the following steps:
- production of electrical energy (18) and free heat flow (20) by the fuel cell (16),
- reception of at least a part (37) of the free heat flow (20) as an energy source by the refrigerated unit (28), and
- cold production (30) in the cold room (24) by the refrigerated unit (28).
